# EUROPEAN PATENT SPECIFICATION

(11) **EP 2 966 879 B1**
(45) Date of publication and mention of the grant of the patent: **29.08.2018**
(21) Application number: 15175361.3
(22) Date of filing: 03.07.2015
(51) Int. Cl.: H04R 3/00, H04M 1/60, H04R 29/00, H04M 1/725, H04M 1/02, G06F 3/16, G06F 3/048

(54) **ELECTRONIC APPARATUS AND METHOD FOR ACTIVATING SPECIFIED FUNCTION THEREOF**
ELEKTRONISCHE VORRICHTUNG UND VERFAHREN ZUR AKTIVIERUNG EINER SPEZIFISCHEN FUNKTION DAFÜR
APPAREIL ÉLECTRONIQUE ET PROCÉDÉ D'ACTIVATION D'UNE FONCTION SPÉCIFIÉE DE CELUI-CI

(30) Priority: 09.07.2014 US 201414326478
(43) Date of publication of application: 13.01.2016
(73) Proprietor: HTC Corporation, Taoyuan City 330 (TW)
(72) Inventor: Tong, Hann-Shi, 330 Taoyuan City (TW); Cheng, Chih-Chiang, 330 Taoyuan City (TW); Lee, Yu-Sheng, 330 Taoyuan City (TW); Chen, Lei, 330 Taoyuan City (TW); Lee, Chun-Min, 330 Taoyuan City (TW)
(74) Representative: Murgitroyd & Company

(56) References cited:
- EP-A1- 2 369 852
- EP-A1- 2 405 675
- EP-A1- 2 645 740
- WO-A1-2011/079875
- US-A1- 2006 126 857
- US-A1- 2011 116 643

## Description

### BACKGROUND

### Field of the Invention

The invention relates to a specified function activating method for an electronic apparatus. Particularly, the invention relates to a specified function or application program activating method by detecting an acoustic impedance or excursion of at least one speaker.

### Description of Related Art

Nowadays portable electronic apparatuses are widely used. For providing a convenience operation interface, touch panel is the most popular structure. By using touch sensors in the touch panel, the sensing area would be restricted by the touch panel. Such as that, the virtual key would occupy the area of the display area. That is, in conventional art, the size and cost of the portable electronic apparatus would be increased for increasing touch sensing areas.
WO 2011/079875 A1, EP 2 645 740 A1, EP 2 369 852 A1, US 2011/116643 A1, and US 2006/126857 A1 may be regarded as background art useful for understanding the invention.

### SUMMARY OF THE INVENTION

It is an object of an embodiment of the present invention to provide an electronic apparatus and a method for activating a specified function or application program by detecting an acoustic impedance or an excursion of at least one speaker, which can improve the convenience of the electronic apparatus. This object can be achieved by the features defined in the independent claims.

The invention provides an electronic apparatus. The electronic apparatus includes a speaker, an audio signal processor and an application processor. The audio signal processor is coupled to the speaker and used for sensing a variation of an acoustic condition of the speaker, wherein the acoustic condition is determined by the audio signal processor according to an impedance of the speaker or an excursion of the speaker. The application processor is coupled to the audio signal processor, and the application processor is configured for: generating a logic waveform signal, having states low and high, in response to the sensed variation of the acoustic condition; comparing the logic waveform signal with a defined pattern, for determining whether the logic waveform signal and the defined pattern are matched or not; interpreting, by the application processor, the logic waveform signal as a control signal when the logic waveform signal and the defined pattern are matched; activating at least one application program or at least one function corresponding to the control signal.

The invention provides a method for activating a specified function and sensing a variation of an acoustic condition of a speaker, wherein the acoustic condition is determined by the audio signal processor according to an impedance of the speaker or an excursion of the speaker. The steps of the method include: generating a logic waveform signal, having states low and high, in response to the sensed variation of the acoustic condition; comparing the logic waveform signal with a defined pattern for determining whether the logic waveform signal and the defined pattern are matched or not; interpreting by the application processor the logic waveform signal as a control signal when the logic waveform signal and the defined pattern are matched; and activating at least one application program or at least one function corresponding to the control signal.

According to the invention, the specified function can be activated by detecting the acoustic condition of one or more speaker. That is, a user of the electronic apparatus may generate a logic high or low signal by covering at least one speaker opening of corresponding speaker. Moreover, at least one application program may be activated by the logic high or low signal. In this invention, the touch sensing areas may be extended by the region of the speaker openings. The convenience of the electronic apparatus is improved.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A is a schematic diagram of an electronic apparatus according to an embodiment of present disclosure.
FIG. 1B is another schematic diagram of an electronic apparatus according to an embodiment of present disclosure.
FIG. 2A is a waveform of the impedance curve of the speaker.
FIG. 2B is a waveform of the excursion curve of the speaker.
FIG. 3 is a waveform of the logic high or low signal TG according to the embodiment of the present disclosure.
FIG. 4 is an application example of an electronic apparatus according to an embodiment of the present disclosure.
FIG. 5 is a schematic diagram of audio signal processor according to an embodiment of present disclosure.
FIG. 6 is a flow chart of a method for activating a specified function according to an embodiment of the present disclosure.
FIG. 7 is another flow chart of the method for activating a specified function according to another embodiment of the present disclosure.

### DETAILED DESCRIPTION

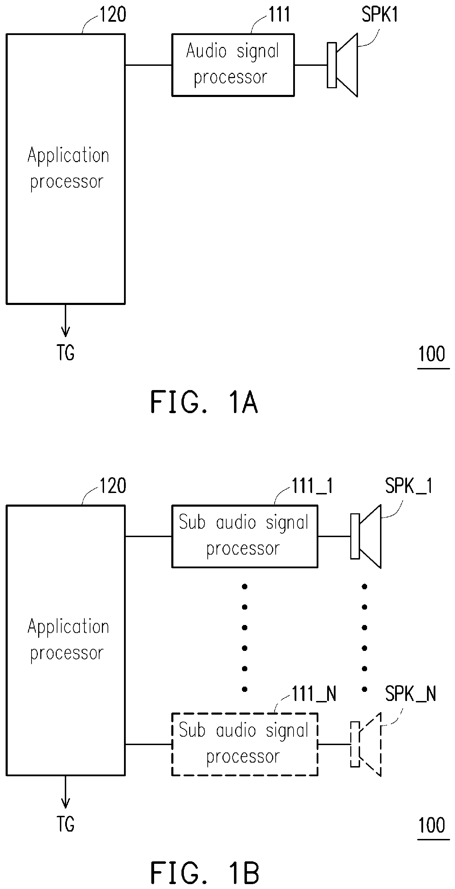

Referring to FIG. 1A, FIG. 1A is a schematic diagram of an electronic apparatus according to an embodiment of present disclosure. The electronic apparatus 100 includes a speaker SPK, an audio signal processor 111, and an application processor 120. The speaker SPK is corresponding to the audio signal processor 111, and the speaker SPK is coupled to the audio signal processor 111. The application processor 120 is coupled to the audio signal processor 111.

The audio signal processor 111 is used to sense a variation of an acoustic condition of the speaker SPK. In other word, the audio signal processor 111 is used to sense an acoustic impedance of the speakers SPK, and generates sensing signal accordingly. In detail, for example, the audio signal processor 111 may send a detection signal to drive the speaker SPK when an acoustic impedance sensing operation is executed. Furthermore, the speaker SPK has a speaker opening, and when the speaker opening of the speaker SPK is obstructed, the acoustic impedance of the speaker SPK is varied accordingly. The corresponding audio signal processor 111 senses a variation of the acoustic impedance to obtain the variation of the acoustic condition by sensing the impedance of the speaker SPK.

Referring to FIG. 1B, FIG. 1B is another schematic diagram of an electronic apparatus according to an embodiment of present disclosure. The electronic apparatus 100 may include more sub speakers (such as the sub speakers SPK_1-SPK_N), and more sub audio signal processors (such as the audio signal processors 111_1-111_N). The N sub audio signal processors 111_1-111_N respectively sense the variation of the acoustic condition (variations the impedances) of the N sub speakers SPK_1-SPK_N and generate N sub sensing signals according to the variation of the acoustic conditions of N sub speakers SPK_1-SPK_N.

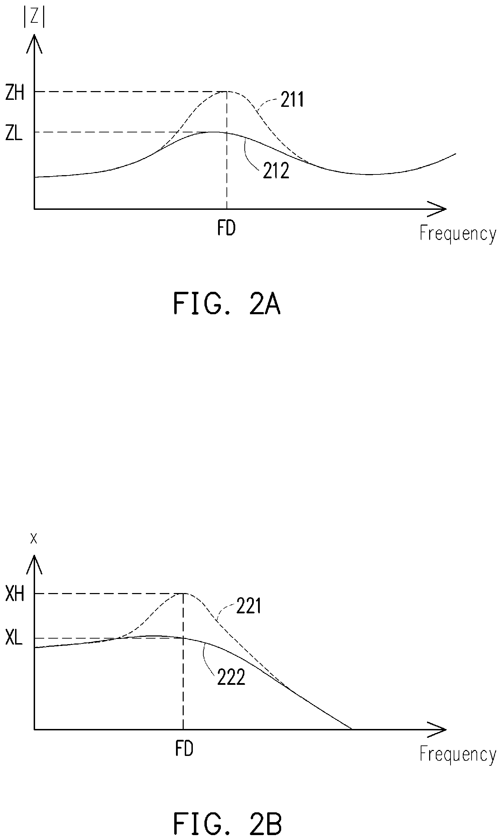

Referring to FIG. 2A, FIG. 2A is a waveform of the impedance curve of the speaker. In FIG. 2A, the vertical axis shows impedance of the speaker, and the horizontal axis shows the frequency of the detection signal. A curve 211 shows the impedance of the speaker SPK when the opening of the speaker SPK is not obstructed, and a curve 212 shows the impedance of the speaker SPK when the speaker opening of the speaker SPK is obstructed. It can be seen from FIG. 2A, when the speaker opening of the speaker SPK is obstructed, the impedance of the speaker SPK may be reduced during a frequency region. For example, by sending a detection signal with frequency FD, the impedance of the speaker is reduced from the impedance ZH (by curve 211) to the impedance ZL (by curve 212) when the speaker opening of the speaker SPK is obstructed. That is, the audio signal processor 111 senses sense the acoustic condition of the corresponding speaker SPK by sensing the impedance of the corresponding speaker SPK.

On the other hand, the audio signal processor 111 senses the acoustic condition of the speaker SPK by sensing an excursion the corresponding speaker SPK. Referring to FIG. 2B, FIG. 2B is a waveform of the excursion curve of the speaker. In FIG. 2B, the vertical axis shows excursion of the speaker, and the horizontal axis shows the frequency of the detection signal. A curve 221 shows the excursion of the speaker SPK when the speaker opening of the speaker SPK is not obstructed, and a curve 222 shows the excursion of the speaker SPK when the speaker opening of the speaker SPK is obstructed. It can be seen from FIG. 2B, when the speaker opening of the speaker SPK is obstructed, the excursion of the speaker SPK may be reduced during a frequency region. For example, by sending a detection signal with frequency FD, the impedance of the speaker is reduced from the excursion XH (by curve 221) to the excursion XL (by curve 222) when the speaker opening of the speaker SPK is obstructed. That is, the audio signal processor 111 senses the acoustic impedance of the corresponding speaker SPK by sensing the excursion of the corresponding speaker SPK.

That is, the variation of the acoustic condition of the speaker SPK is obtained according to at least one of the impedance and the excursion of the speaker SPK.

Referring to FIG. 1A, the application processor 120 generates a logic high or low signal TG in response to the sensed variation of the acoustic condition of the speaker SPK. The logic high or low signal TG is interpreted by the application processor 120 to be a control signal. Further, the application processor 120 performs an instruction corresponding to the control signal.

In an embodiment of the disclosure, the audio signal processor 111 may generate a quality factor of the speaker SPK according to the impedance of the speaker SPK. The impedance of the speaker SPK is decreased when a user obstructs the speaker opening of the speaker SPK, and the impedance of the speaker SPK is increased when a user removes the obstruction to the speaker opening of the speaker SPK. Accordingly, the quality factor of the speaker SPK is varied according to the position of the obstruction related to the speaker opening of the speaker SPK, and the variation of the quality factor may be obtained by the audio signal processor 111.

Also, the audio signal processor 111 may further generate the quality factor of the speaker SPK according to the excursion of the speaker SPK. The excursion of the speaker SPK is decreased when the user obstructs the speaker opening of the speaker SPK, and the excursion of the speaker SPK is increased when a user removes the obstruction to the speaker opening of the speaker SPK.

Of course, the quality factor of the speaker SPK may be obtained according to both of the excursion and impedance of the speaker SPK.

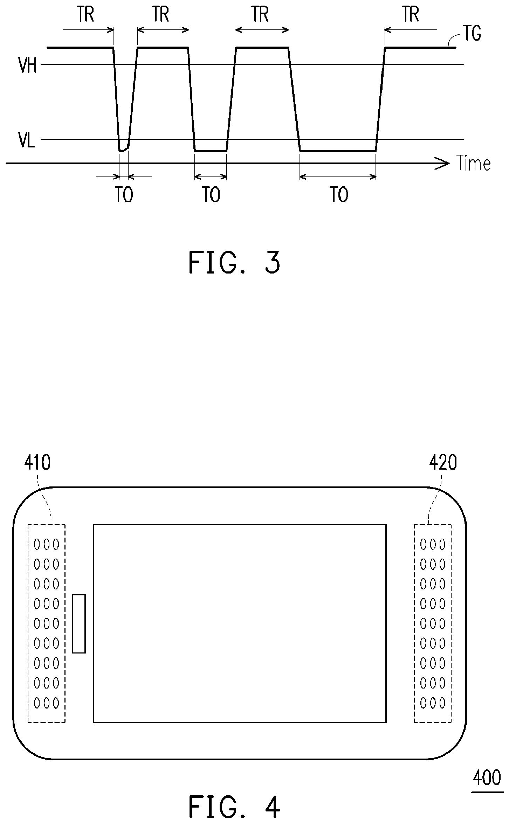

By comparing the quality factor of the speaker SPK with a threshold value, the application processor 120 may generate the logic high or low signal TG. Referring to FIG. 3, FIG. 3 is a waveform of the logic high or low signal TG according to the embodiment of the present disclosure. In FIG. 3, during the time periods TR, a finger of the user is released from the opening of the speaker, and the quality factor of the speaker is increased accordingly, and the logic high or low signal TG is set to a high voltage level VH. On the contrary, during the time periods TD, the finger of the user obstructs the opening of the speaker, and the quality factor of the speaker is decreased accordingly, and the logic high or low signal TG is set to a low voltage level VL. Apparently, the logic high or low signal TG with one or more pulses can be obtained by obstructing and releasing from the opening of the speaker once or continuously by the user.

The pulse width of the logic high or low signal TG can be controlled by user, and when the user obstructs the speaker opening for a long time, the logic high or low signal TG may have a low pulse with longer width.

Of course, the relationship between the voltage level of the logic high or low signal TG and the obstruction status of the speaker is not fixed and may be defined by designer. In another embodiment of present disclosure, the voltage level of the logic high or low signal TG may be set to the lower voltage level VL when the speaker opening is not obstructed, and the voltage level of the logic high or low signal TG may be set to the higher voltage level VH when the speaker opening is obstructed.

Referring to FIG. 1B again, a plurality of sub audio signal processors 111_1-111_N and sub speakers SPK_1-SPK_N may provide a plurality of sub quality factors to the application processor 120. The application processor 120 may generate a plurality of sub logic high or low signals according to the sub quality factors of the sub speakers SPK_1-SPK_N, respectively. Furthermore, the application processor 120 may generate the logic high or low signal TG according to the sub logic high or low signal. For an example, the application processor 120 may operate a logic operation on the sub logic high or low signals to generate the logic high or low signal TG.

On the other hand, the application processor 120 provides the logic high or low signal TG to perform an instruction to activate an application program of the electronic apparatus 100. The application processor 120 compares the logic high or low signal and a defined pattern for determining whether to activate the application program or not. In detail, a plurality of defined patterns may be provided to the application processor 120. The plurality of defined patterns may respectively correspond to a plurality application program or a plurality functions of an application program. When a logic high or low signal TG is obtained by application processor 120, the application processor 120 compares a waveform of the logic high or low signal TG and the all of the defined patterns. While one of the defined patterns matches the waveform of the logic high or low signal TG, a control signal is interpreted and the application program corresponding to the matched data pattern is selected for executing corresponding to the control signal. On the contrary, while there are no defined pattern matches the waveform of the logic high or low signal TG, the logic high or low signal TG is an invalid signal, and is ignored by the electronic apparatus 100.

The defined patterns may be pre-set by designer of the electronic apparatus 100, and the data patterns may stored in a storage device (such as memory) which may be embedded in or coupled to the application processor 120.

Referring to FIG. 4, FIG. 4 is an application example of an electronic apparatus according to an embodiment of the present disclosure. The electronic apparatus 400 may be a smart phone and have a housing with an aperture. In FIG. 4, two speakers are respectively disposed in opposite sides of the electronic apparatus 400. Two speaker opening 410 and 420 are dispose on a top surface of the electronic apparatus 400, and audio in transport through the speaker openings 410 and 420. The speaker openings 410 and 420 face the aperture of the housing for output audible sounds through the aperture. The speakers of the electronic apparatus 400 are driven by detection signals. When a user want to activate a specified application program, the user can use one or two fingers to cover at least portion of at least one of the speaker openings 410 and 420 once or several times for generating a logic high or low signal. Then, the specified application program is activated by the logic high or low signal.

For example, when the electronic apparatus 400 receives a phone call, and the phone ringing may be broadcasted by the speakers in the electronic apparatus 400. If the user want to stop the phone ringing, user may use one or two fingers to cover at least portion of at least one of the speaker openings 410 and 420 once or several times to generate a logic high or low signal, and the phone call may be stop by the logic high or low signal.

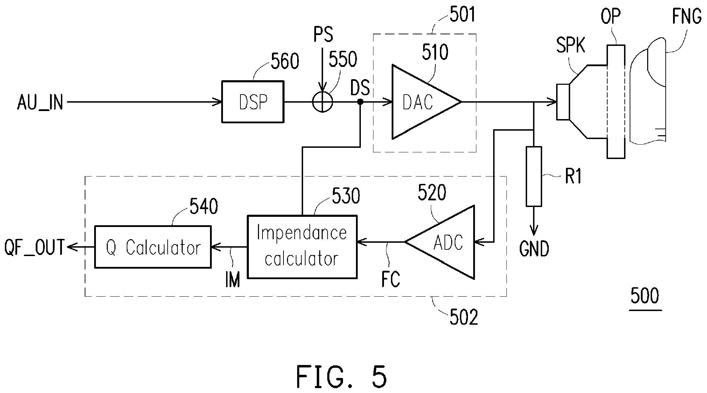

Referring to FIG. 5, FIG. 5 is a schematic diagram of audio signal processor according to an embodiment of present disclosure. The audio signal processor 500 includes driving circuit 501, an acoustic impedances condition sensor 502, a mixer 550, and a digital signal processor (DSP) 560. The driving circuit 501 includes a digital to analog converter (DAC) 510. The acoustic impedances condition sensor 502 includes an analog to digital converter (ADC) 520, an impedance calculator 530, and a quality factor (Q) calculator 540. An output end of the DAC 510 is coupled to the speaker SPK, and an input end of the DAC 510 is coupled to the mixer 550 for receiving a detection signal DS. The DSP 560 receives a playback audio signal AU_IN from the application processor, and the DSP 560 operates a digital process on the playback audio signal AU_IN to generate a driving signal PAU. The DSP 560 is further coupled to the mixer 550, and provides the driving signal PAU to the mixer 550. The mixer 550 may receive at least one of the driving signal PAU and a pilot signal PS. If both of the driving signal PAU and the pilot signal PS are received by the mixer 550, the mixer 550 mixing the driving signal PAU and the pilot signal PS for generating the detection signal DS. Otherwise, if only one of the driving signal PAU and the pilot signal PS is received by the mixer 550, the mixer 550 passes the received signal to be the detection signal DS. Besides, the pilot signal PS may be provided by the application processor.

Here, the pilot signal PS is a wide band and low volume audio signal, and when only the pilot signal PS is transported to the driving circuit 501, the speaker SPK broadcasts a low volume audio. Besides, a frequency of the pilot signal PS may be between 500-1KHz, or less than 100Hz. The driving circuit 501 may includes a digital to analog converter (DAC) 510, and the DAC 510 converts the detection signal DS into a driving voltage for driving the speaker SPK.

The acoustic impedances condition sensor 502 is coupled to the speaker SPK, receiving a current signal and the detection and obtaining the variation of the acoustic condition of the speaker. The ADC 520 is coupled to the speaker SPK, and the ADC 520 receives a driving current signal from the speaker SPK, and the driving current signal may be in analog format. The ADC 520 converts the driving current signal to digital format and generates a feedback current signal FC accordingly. The impedance calculator 530 is coupled to the ADC 520 and receives the feedback current signal FC. The impedance calculator 530 is also coupled to the input of the DAC 510 for receiving the detection signal DS. The detection signal DS is a voltage signal which is transported to the speaker SPK for driving the speaker SPK. That is, the impedance calculator 530 may obtain the impedance IM of the speaker SPK according to the detection signal DS and the feedback current signal FC. In detail, the impedance calculator 530 may obtain the impedance IM of the speaker SPK by dividing the detection signal DS by the feedback current signal FC.

The Q calculator 540 is coupled to the impedance calculator 530 for receiving the impedance IM of the speaker SPK. The Q calculator 540 may calculate a quality factor QF_OUT of the speaker SPK according to the impedance IM.

In detail operation of the audio signal processor 500, when the acoustic impedance sensing operation is operated, the detection signal DS is generated and transported to drive the speaker SPK. The detection signal DS may be the pilot signal PS only, and the pilot signal PS is a low volume audio signal which can not be heard by a user. Besides, the detection signal DS may be the driving signal PAU only, or mixing by the driving signal PAU and the pilot signal PS.

Then, when a finger FNG of the user covers a speaker opening OP of the speaker SPK, the acoustic impedance of the speaker SPK is changed. At this time, the ADC 520 receives the current signal of the speaker SPK and generates the feedback current signal FC by analog-to-digital converting operation. Furthermore, the current signal of the speaker SPK may be obtained by a current sensing resistor R1 which is coupled between the speaker SPK and a reference ground end GND.

The impedance calculator 530 receives the feedback current signal FC and the detection signal DS to respectively obtain a current and a voltage signal on the speaker SPK. That is, the impedance calculator 530 may calculate the impedance IM of the speaker SPK according to the feedback current signal FC and the detection signal DS. Such as that, the Q calculator 540 may generate the quality factor QF_OUT according to the impedance IM.

Please note that, the quality factor QF_OUT may be varied according the variation of the acoustic impedance of the speaker SPK. The logic high or low signal can be generated by the variation of the quality factor QF_OUT. For example, when the quality factor QF_OUT is reduced to lower than a first preset value, the logic high or low signal may be set to logic low, and when the quality factor QF_OUT is raised to higher than a second preset value, the logic high or low signal may be set to logic high. Here, the first preset value may be lower than the second preset value, or the first preset value may be equaled to the second preset value.

It can be realized, the logic high or low signal may be generated by the position relationship of the finger FNG and the speaker opening OP. The user may control the logic level of the logic high or low signal by obstructing or releasing from the speaker opening OP. That is, the logic high or low signal with arbitrarily pulse number and pulse width can be generated.

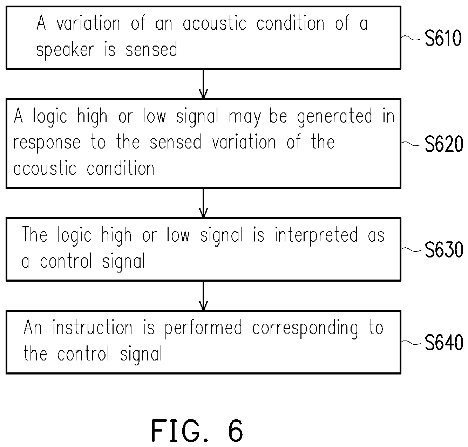

Referring to FIG. 6, FIG. 6 is a flow chart of a method for activating a specified function according to an embodiment of the present disclosure. In step S610, at least one variation of an acoustic condition of at least one speaker is sensed, and in step S620, a logic high or low signal is generated in response to the sensed variation of the acoustic condition. Further, in step S630, the logic high or low signal and a defined pattern is compared for determining whether the logic high or low signal and the defined pattern are matched or not, and in step S640, at least one application program or at least one function is activated when the logic high or low signal and the defined pattern are matched.

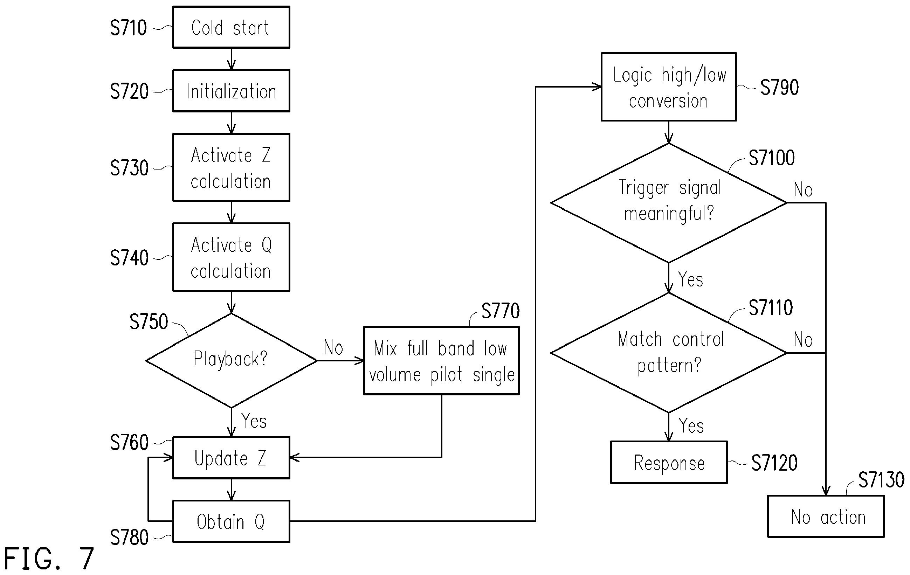

In detail, referring to FIG. 7, FIG. 7 is another flow chart of the method for activating a specified function according to another embodiment of the present disclosure. In steps S710 and S720, an audio broadcasting system of an electronic apparatus is cold started and initialized, respectively. In step S730, one or more audio signal processors are activated for sensing the acoustic impedances of the speakers by calculating the impedances (Z) of the speaks, and in step S740, the audio signal processors are activated to calculate the quality factors (Q) according to the impedances (Z) of the speak. Further, the step S750 checks whether an audio signal playback or not. If a result of step S750 is yes, the impedances of the speaker is keeping on updated by voltage signals and current signals, wherein, each of the voltage signals is used to driving the corresponding speaker, and each of the current signals is a current of corresponding speaker. On the contrary, if the result of step S750 is no, a pilot signal with full band and low volume is generated to keep the impedance calculation correct (step S770).

In step S780, quality factors (Q) of the speakers can be obtained according to the impedances obtained in step S760. By checking the variation of each of the quality factors, a logic high or low conversation operation is executed in step S790, and a logic high or low signal may be generated. The step S7100 checks whether the logic high or low signal is meaningful or not. If the check result of step S7100 is yes, the logic high or low signal may be compared with a defined pattern. If the logic high or low signal matches with the defined pattern, a function corresponding to the defined pattern responds accordingly in step S7120. Besides, if at least one the check results of steps S7100 and S7110 are no, no action is operated in the electronic apparatus (step S7130).

Please note here, a plurality of defined patterns may be pre-set, and the defined patterns may respectively correspond to a plurality functions. When the logic high or low signal matches with one of the defined patterns, the function corresponding to the matched defined pattern is executed. Besides, the specified functions may be executed by one or more application programs or circuits in the electronic apparatus.

## Claims

1. An electronic apparatus, comprising:
a speaker;
an audio signal processor (111), coupled to the speaker, for sensing a variation of an acoustic condition of the speaker, wherein the acoustic condition is determined by the audio signal processor (111) according to an impedance of the speaker or an excursion of the speaker; and
an application processor (120), coupled to the audio signal processor (111), **characterised in that**
the application processor (120) is configured for:
generating a logic waveform signal, having states low and high, in response to the sensed variation of the acoustic condition; comparing the logic waveform signal with a defined pattern, for determining whether the logic waveform signal and the defined pattern are matched or not;
interpreting, by the application processor (120), the logic waveform signal as a control signal when the logic waveform signal and the defined pattern are matched; and
activating at least one application program or at least one function corresponding to the control signal.

2. The electronic apparatus according to claim 1, wherein the audio signal processor (111) is further configured to generate a quality factor according to at least one of the excursion and the impedance based on the acoustic condition.

3. The electronic apparatus according to claim 2, wherein the application processor (120) is configured to convert the quality factor to the logic waveform signal based on whether the quality factor is less than a threshold value; and
wherein the application processor (120) comprises N sub audio signal processors (111_1-111_N), and the N sub audio signal processors (111_1-111_N), respectively coupled to N sub speakers, are configured to sense the variation of the acoustic condition of the N sub speakers and the N sub audio signal processors (111_1-111_N) are configured to generate N sub quality factors according to the variation of the acoustic conditions of N sub speakers;
wherein the application processor (120) is configured to generate N sub logic waveform signals according to the N sub quality factors and to interpret the N sub logic waveform signals as the control signal;
wherein, N is a positive integer larger than 1.

4. The electronic apparatus according to claim 1, 2 or 3, further comprising:
a housing with an aperture, wherein the speaker comprises an opening facing the aperture of the housing for being able to output audible sounds through the aperture,
the audio signal processor (111) is configured for sensing at least one of an impedance resonance curve and an excursion resonance curve of the speaker and for calculating the quality factor according to at least one of the impedance and the excursion of the speaker based on at least one of the impedance resonance curve and the excursion resonance curve when the speaker outputs audible sound through the aperture.

5. The electronic apparatus according to claim 1, 2 or 3, wherein the audio signal processor (120) is configured for:
determining whether the application processor (120) is providing a playback audio signal or a pilot signal;
generating the pilot signal when the application processor (120) is not providing the playback audio signal;
converting the pilot signal to a driving voltage to drive the speaker; and
sensing the variation of the acoustic condition of the speaker in response to the driving voltage;
wherein the pilot signal is a full band signal with a volume smaller than an audible value, and wherein the pilot signal is generated as a driving signal.

6. The electronic apparatus according to claim 5, wherein the application processor (120) is configured to provide the playback audio signal and the pilot signal, and the audio signal processor is configured to mix the playback audio signal and the pilot signal to generate a driving signal, the audio signal processor is configured to convert the driving signal into the driving voltage and to drive the speaker according to the driving voltage; wherein the pilot signal is a full band signal with a volume smaller than an audible value.

7. The electronic apparatus according to claim 5 or 6, wherein the application processor (120) is configured to provide the playback audio signal, and the playback audio signal is a wide band signal with a volume lower than an audible value, the audio signal processor is configured to receive the playback audio signal to be a detection signal and to drive the speaker according to the detection signal.

8. The electronic apparatus according to claim 1, 2, 3, 5, 6 or 7, wherein the audio signal processor (111, 500) comprises:
a digital signal processor (560), for providing a driving signal;
a driving circuit (501), coupled between the digital signal processor (560) and the speaker, for converting the driving signal into a driving voltage and for driving the speaker based on the driving voltage;
an acoustic impedances condition sensor (502), coupled to the speaker and the digital signal processor (560), for receiving a driving current from the speaker and the driving signal from the digital signal processor (560) and for sensing the variation of the acoustic condition of the speaker based on the driving signal and the driving current.

9. The electronic apparatus as claimed in claim 8, wherein the acoustic impedances condition sensor (502) comprises:
an analog to digital converter (520), coupled to the speaker, for receiving the driving current in analog format from the speaker and converting the driving current into a feedback current signal in digital format; and
an impedance calculator (530), coupled to the analog to digital converter (520) and the digital signal processor (560), for calculating the impedance of the speaker according to the feedback current signal and the driving signal.

10. The electronic apparatus according to claims 8 to 9, wherein each of the acoustic impedances condition sensor (502) further comprises:
a quality factor calculator (540), coupled to the impedance calculator (530), for generating the quality factor according to at least one of the excursion and the impedance based on the acoustic condition; and/or
wherein the driving circuit (501) is a digital to analog converter (510); and/or
wherein the digital signal processor (560) further comprises: a mixer (550), coupled to the digital to analog converter (510), mixing a pilot signal and an audio signal to generate a mixed signal as the driving signal.

11. A method for activating a specified function, comprising:
sensing a variation of an acoustic condition of a speaker, wherein the acoustic condition is determined by an audio signal processor (111) according to an impedance of the speaker or an excursion of the speaker; **characterised by**
generating a logic waveform signal, having states low and high, in response to the sensed variation of the acoustic condition;
comparing the logic waveform signal with a defined pattern for determining whether the logic waveform signal and the defined pattern are matched or not;
interpreting by an application processor (120) the logic waveform signal as a control signal when the logic waveform signal and the defined pattern are matched; and
activating at least one application program or at least one function corresponding to the control signal.

12. The method as claimed in claim 11, wherein the step of generating the logic waveform signal in response to the sensed variation of the acoustic condition further comprises:
generating a quality factor according to at least one of the excursion and the impedance based on the acoustic condition; and
generating the logic waveform signal according to the quality factor; and
converting the quality factor to the logic waveform signal based on whether the quality factor is less than a threshold value.

13. The method according to claim 12, wherein if a number of the speaker is N and a number of the audio signal processor (111_1-111_N) is N, the method further comprises:
respectively sensing the variation of the acoustic condition of the N speakers;
generating N sub quality factors according to the variation of the acoustic conditions of N speakers;
generating N sub logic waveform signals according to the N sub quality factors; and
interpreting the N sub logic waveform signals as the control signal, wherein, N is a positive integer larger than 1.

14. The method according to claim 13, wherein the method further comprising:
determining whether the application processor (120) is providing a playback audio signal or a pilot signal;
generating the pilot signal when the application processor (120) is not providing the playback audio signal;
converting the pilot signal to a driving voltage to drive the speaker; and
sensing the variation of the acoustic condition of the speaker in response to the driving voltage,
wherein the pilot signal is a full band signal with a volume smaller than an audible value, and wherein the pilot signal is generated as a driving signal.

15. The method according to claim 14, wherein the step of determining whether the application processor (120) is providing the playback audio signal, further comprising:
the playback audio signal is a wide band signal with a volume lower than an audible value; and
receiving the playback audio signal to be a detection signal and driving the speaker according to the detection signal.

## Patentansprüche

1. Eine elektronische Vorrichtung, beinhaltend:
einen Lautsprecher;
einen Audiosignalprozessor (111), der an den Lautsprecher gekoppelt ist, zum Erkennen einer Variation einer akustischen Bedingung des Lautsprechers, wobei die akustische Bedingung durch den Audiosignalprozessor (111) gemäß einer Impedanz des Lautsprechers oder einer Abweichung des Lautsprechers bestimmt wird; und
einen Anwendungsprozessor (120), der an den Audiosignalprozessor (111) gekoppelt ist,
**dadurch gekennzeichnet, dass**
der Anwendungsprozessor (120) für Folgendes konfiguriert ist:
Erzeugen eines Logikwellenformsignals, das einen niedrigen und einen hohen Zustand aufweist, als Reaktion auf die erkannte Variation der akustischen Bedingung;
Vergleichen des Logikwellenformsignals mit einem definierten Muster, um zu bestimmen, ob das Logikwellenformsignal und das definierte Muster übereinstimmen oder nicht;
Interpretieren, durch den Anwendungsprozessor (120), des Logikwellenformsignals als ein Steuersignal, wenn das Logikwellenformsignal und das definierte Muster übereinstimmen; und
Aktivieren mindestens eines Anwendungsprogramms oder mindestens einer Funktion entsprechend dem Steuersignal.

2. Elektronische Vorrichtung gemäß Anspruch 1, wobei der Audiosignalprozessor (111) ferner konfiguriert ist, um einen Qualitätsfaktor gemäß mindestens einem der Abweichung und der Impedanz basierend auf der akustischen Bedingung zu erzeugen.

3. Elektronische Vorrichtung gemäß Anspruch 2, wobei der Anwendungsprozessor (120) konfiguriert ist, um den Qualitätsfaktor in das Logikwellenformsignal basierend darauf, ob der Qualitätsfaktor geringer als ein Schwellenwert ist, umzuwandeln; und
wobei der Anwendungsprozessor (120) N Sub-Audiosignalprozessoren (111_1 - 111_N) beinhaltet und die N Sub-Audiosignalprozessoren (111_1 - 111_N), jeweils an N Sub-Lautsprecher gekoppelt, konfiguriert sind, um die Variation der akustischen Bedingung der N Sub-Lautsprecher zu erkennen und die N Sub-Audiosignalprozessoren (111_1 - 111_N) konfiguriert sind, um N Sub-Qualitätsfaktoren gemäß der Variation der akustischen Zustände der N Sub-Lautsprecher zu erzeugen; wobei der Anwendungsprozessor (120) konfiguriert ist, um N Sub-Logikwellenformsignale gemäß den N Sub-Qualitätsfaktoren zu erzeugen und die N Sub-Logikwellenformsignale als das Steuersignal zu interpretieren;
wobei N eine positive ganze Zahl größer als 1 ist.

4. Elektronische Vorrichtung gemäß Anspruch 1, 2 oder 3, die ferner Folgendes beinhaltet:
ein Gehäuse mit einer Apertur, wobei der Lautsprecher eine Öffnung beinhaltet, die der Apertur des Gehäuses zugewandt ist, um hörbare Geräusche durch die Apertur ausgeben zu können, wobei der Audiosignalprozessor (111) zum Erkennen von mindestens einem von einer Impedanzresonanzkurve und einer Abweichungsresonanzkurve des Lautsprechers und zum Berechnen des Qualitätsfaktors gemäß mindestens einem der Impedanz und der Abweichung des Lautsprechers basierend auf mindestens einem der Impedanzresonanzkurve und der Abweichungsresonanzkurve, wenn der Lautsprecher hörbare Geräusche durch die Apertur ausgibt, konfiguriert ist.

5. Elektronische Vorrichtung gemäß Anspruch 1, 2 oder 3, wobei der Audiosignalprozessor (120) für Folgendes konfiguriert ist:
Bestimmen, ob der Anwendungsprozessor (120) ein Playbackaudiosignal oder ein Pilotsignal bereitstellt;
Erzeugen des Pilotsignals, wenn der Anwendungsprozessor (120) das Playbackaudiosignal nicht bereitstellt;
Umwandeln des Pilotsignals in eine Antriebsspannung, um den Lautsprecher anzutreiben; und
Erkennen der Variation der akustischen Bedingung des Lautsprechers als Reaktion auf die Antriebsspannung;
wobei das Pilotsignal ein Vollbandsignal mit einem Volumen ist, das kleiner als ein hörbarer Wert ist, und wobei das Pilotsignal als ein Antriebssignal erzeugt wird.

6. Elektronische Vorrichtung gemäß Anspruch 5, wobei der Anwendungsprozessor (120) konfiguriert ist, um das Playbackaudiosignal und das Pilotsignal bereitzustellen, und der Audiosignalprozessor konfiguriert ist, um das Playbackaudiosignal und das Pilotsignal zu mischen, um ein Antriebssignal zu erzeugen, wobei der Audiosignalprozessor konfiguriert ist, um das Antriebssignal in die Antriebsspannung umzuwandeln und den Lautsprecher gemäß der Antriebsspannung anzutreiben;
wobei das Pilotsignal ein Vollbandsignal mit einem Volumen ist, das kleiner als ein hörbarer Wert ist.

7. Elektronische Vorrichtung gemäß Anspruch 5 oder 6, wobei der Anwendungsprozessor (120) konfiguriert ist, um das Playbackaudiosignal bereitzustellen, und das Playbackaudiosignal ein Breitbandsignal mit einem Volumen ist, das niedriger als ein hörbarer Wert ist, wobei der Audiosignalprozessor konfiguriert ist, um das Playbackaudiosignal zu empfangen, um ein Erkennungssignal zu sein und den Lautsprecher gemäß dem Erkennungssignal anzutreiben.

8. Elektronische Vorrichtung gemäß Anspruch 1, 2, 3, 5, 6 oder 7, wobei der Audiosignalprozessor (111, 500) Folgendes beinhaltet:
einen Digitalsignalprozessor (560) zum Bereitstellen eines Antriebssignals;
eine Antriebsschaltung (501), die zwischen den Digitalsignalprozessor (560) und den Lautsprecher gekoppelt ist, um das Antriebssignal in eine Antriebsspannung umzuwandeln und um den Lautsprecher basierend auf der Antriebsspannung anzutreiben;
einen Bedingungssensor akustischer Impedanzen (502), der an den Lautsprecher und den Digitalsignalprozessor (560) gekoppelt ist, um einen Antriebsstrom von dem Lautsprecher und das Antriebssignal von dem Digitalsignalprozessor (560) zu empfangen und um die Variation der akustischen Bedingung des Lautsprechers basierend auf dem Antriebssignal und dem Antriebsstrom zu erkennen.

9. Elektronische Vorrichtung gemäß Anspruch 8, wobei der Bedingungssensor akustischer Impedanzen (502) Folgendes beinhaltet:
einen Analog-Digital-Wandler (520), der an den Lautsprecher gekoppelt ist, um den Antriebsstrom in analogem Format von dem Lautsprecher zu empfangen und den Antriebsstrom in ein Rückführungsstromsignal in digitalem Format umzuwandeln; und
einen Impedanzrechner (530), der an den Analog-Digital-Wandler (520) und den Digitalsignalprozessor (560) gekoppelt ist, um die Impedanz des Lautsprechers gemäß dem Rückführungsstromsignal und dem Antriebssignal zu berechnen.

10. Elektronische Vorrichtung gemäß den Ansprüchen 8 bis 9, wobei jeder des Bedingungssensors akustischer Impedanzen (502) ferner Folgendes beinhaltet:
einen Qualitätsfaktorrechner (540), der an den Impedanzrechner (530) gekoppelt ist, um den Qualitätsfaktor gemäß mindestens einem von der Abweichung und der Impedanz basierend auf der akustischen Bedingung zu berechnen; und/oder
wobei die Antriebsschaltung (501) ein Digital-Analog-Wandler (510) ist; und/oder wobei der Digitalsignalprozessor (560) ferner Folgendes beinhaltet:
einen Mischer (550), der an den Digital-Analog-Wandler (510) gekoppelt ist, der ein Pilotsignal und ein Audiosignal mischt, um ein gemischtes Signal als das Antriebssignal zu erzeugen.

11. Ein Verfahren zum Aktivieren einer spezifischen Funktion, beinhaltend:
Erkennen einer Variation einer akustischen Bedingung eines Lautsprechers, wobei die akustische Bedingung durch einen Audiosignalprozessor (111) gemäß einer Impedanz des Lautsprechers oder einer Abweichung des Lautsprechers bestimmt wird;
**gekennzeichnet durch**
das Erzeugen eines Logikwellenformsignals, das einen niedrigen und einen hohen Zustand aufweist, als Reaktion auf die erkannte Variation der akustischen Bedingung;
das Vergleichen des Logikwellenformsignals mit einem definierten Muster, um zu bestimmen, ob das Logikwellenformsignal und das definierte Muster übereinstimmen oder nicht;
das Interpretieren, durch einen Anwendungsprozessor (120), des Logikwellenformsignals als ein Steuersignal, wenn das Logikwellenformsignal und das definierte Muster übereinstimmen; und
das Aktivieren mindestens eines Anwendungsprogramms oder mindestens einer Funktion entsprechend dem Steuersignal.

12. Verfahren gemäß Anspruch 11, wobei der Schritt des Erzeugens des Logikwellenformsignals als Reaktion auf die erkannte Variation der akustischen Bedingung ferner Folgendes beinhaltet:
Erzeugen eines Qualitätsfaktors gemäß mindestens einem der Abweichung und der Impedanz basierend auf der akustischen Bedingung; und
Erzeugen des Logikwellenformsignals gemäß dem Qualitätsfaktor; und
Umwandeln des Qualitätsfaktors in das Logikwellenformsignal basierend darauf, ob der Qualitätsfaktor geringer als ein Schwellenwert ist.

13. Verfahren gemäß Anspruch 12, wobei, wenn eine Zahl des Lautsprechers N ist und eine Zahl des Audiosignalprozessors (111_1 - 111_N) N ist, das Verfahren ferner Folgendes beinhaltet:
jeweils Erkennen der Variation der akustischen Bedingung der N Lautsprecher;
Erzeugen von N Sub-Qualitätsfaktoren gemäß der Variation der akustischen Zustände von N Lautsprechern;
Erzeugen von N Sub-Logikwellenformsignalen gemäß den N Sub-Qualitätsfaktoren; und
Interpretieren der N Sub-Logikwellenformsignale als das Steuersignal,
wobei N eine positive ganze Zahl größer als 1 ist.

14. Verfahren gemäß Anspruch 13, wobei das Verfahren ferner Folgendes beinhaltet:
Bestimmen, ob der Anwendungsprozessor (120) ein Playbackaudiosignal oder ein Pilotsignal bereitstellt;
Erzeugen des Pilotsignals, wenn der Anwendungsprozessor (120) das Playbackaudiosignal nicht bereitstellt;
Umwandeln des Pilotsignals in eine Antriebsspannung, um den Lautsprecher anzutreiben; und
Erkennen der Variation der akustischen Bedingung des Lautsprechers als Reaktion auf die Antriebsspannung,
wobei das Pilotsignal ein Vollbandsignal mit einem Volumen ist, das kleiner als ein hörbarer Wert ist, und wobei das Pilotsignal als ein Antriebssignal erzeugt wird.

15. Verfahren gemäß Anspruch 14, wobei der Schritt des Bestimmens, ob der Anwendungsprozessor (120) das Playbackaudiosignal bereitstellt, ferner Folgendes beinhaltet:
das Playbackaudiosignal ist ein Breitbandsignal mit einem Volumen, das niedriger als ein hörbarer Wert ist; und
Empfangen des Playbackaudiosignals, um ein Erkennungssignal zu sein, und
Antreiben des Lautsprechers gemäß dem Erkennungssignal.

## Revendications

1. Un appareil électronique, comprenant :
un haut-parleur ;
un processeur de signal audio (111), couplé au haut-parleur, pour capter une variation d'une condition acoustique du haut-parleur, dans lequel la condition acoustique est déterminée par le processeur de signal audio (111) selon une impédance du haut-parleur ou une course du haut-parleur ; et
un processeur d'application (120), couplé au processeur de signal audio (111),
**caractérisé en ce que**
le processeur d'application (120) est configuré pour :
générer un signal logique de forme d'onde, ayant des états bas et haut, en réponse à la variation captée de la condition acoustique ;
comparer le signal logique de forme d'onde à un modèle défini, pour déterminer si le signal logique de forme d'onde et le modèle défini sont concordants ou non ;
interpréter, par le processeur d'application (120), le signal logique de forme d'onde comme un signal de contrôle quand le signal logique de forme d'onde et le modèle défini sont concordants ; et
activer au moins un programme d'application ou au moins une fonction correspondant au signal de contrôle.

2. L'appareil électronique selon la revendication 1, dans lequel le processeur de signal audio (111) est en sus configuré afin de générer un facteur de qualité selon au moins un élément parmi la course et l'impédance en se basant sur la condition acoustique.

3. L'appareil électronique selon la revendication 2, dans lequel le processeur d'application (120) est configuré afin de convertir le facteur de qualité en signal logique de forme d'onde selon que le facteur de qualité est inférieur ou non à une valeur de seuil ; et dans lequel le processeur d'application (120) comprend N sous-processeurs de signal audio (111_1 - 111_N), et les N sous-processeurs de signal audio (111_1 - 111_N), couplés respectivement aux N sous-haut-parleurs, sont configurés afin de capter la variation de la condition acoustique des N sous-haut-parleurs et les N sous-processeurs de signal audio (111_1 - 111_N) sont configurés afin de générer N sous-facteurs de qualité selon la variation des conditions acoustiques de N sous-haut-parleurs ;
dans lequel le processeur d'application (120) est configuré afin de générer N sous-signaux logiques de forme d'onde selon les N sous-facteurs de qualité et d'interpréter les N sous-signaux logiques de forme d'onde comme le signal de contrôle ;
dans lequel N est un nombre entier positif supérieur à 1.

4. L'appareil électronique selon la revendication 1, la revendication 2 ou la revendication 3, comprenant en sus :
un logement avec un orifice, dans lequel le haut-parleur comprend une ouverture tournée vers l'orifice du logement pour pouvoir émettre des sons audibles à travers l'orifice, le processeur de signal audio (111) est configuré pour capter au moins un élément parmi une courbe de résonance d'impédance et une courbe de résonance de course du haut-parleur et pour calculer le facteur de qualité selon au moins un élément parmi l'impédance et la course du haut-parleur en se basant sur au moins un élément parmi la courbe de résonance d'impédance et la courbe de résonance de course quand le haut-parleur émet un son audible à travers l'orifice.

5. L'appareil électronique selon la revendication 1, la revendication 2 ou la revendication 3, dans lequel le processeur de signal audio (120) est configuré pour :
déterminer si le processeur d'application (120) fournit un signal audio de play-back ou un signal pilote ;
générer le signal pilote quand le processeur d'application (120) ne fournit pas le signal audio de play-back ;
convertir le signal pilote en une tension de commande afin de commander le haut-parleur ; et
capter la variation de la condition acoustique du haut-parleur en réponse à la tension de commande ;
dans lequel le signal pilote est un signal pleine bande avec un volume plus faible qu'une valeur audible, et dans lequel le signal pilote est généré en tant que signal de commande.

6. L'appareil électronique selon la revendication 5, dans lequel le processeur d'application (120) est configuré afin de fournir le signal audio de play-back et le signal pilote, et le processeur de signal audio est configuré afin de mélanger le signal audio de play-back et le signal pilote afin de générer un signal de commande, le processeur de signal audio est configuré afin de convertir le signal de commande en tension de commande et de commander le haut-parleur selon la tension de commande ;
dans lequel le signal pilote est un signal pleine bande avec un volume plus faible qu'une valeur audible.

7. L'appareil électronique selon la revendication 5 ou la revendication 6, dans lequel le processeur d'application (120) est configuré afin de fournir le signal audio de play-back, et le signal audio de play-back est un signal large bande avec un volume plus bas qu'une valeur audible, le processeur de signal audio est configuré afin de recevoir le signal audio de play-back pour qu'il soit un signal de détection et de commander le haut-parleur selon le signal de détection.

8. L'appareil électronique selon la revendication 1, la revendication 2, la revendication 3, la revendication 5, la revendication 6 ou la revendication 7, dans lequel le processeur de signal audio (111, 500) comprend :
un processeur de signal numérique (560), pour fournir un signal de commande ; un circuit de commande (501), couplé entre le processeur de signal numérique (560) et
le haut-parleur, pour convertir le signal de commande en une tension de commande et pour commander le haut-parleur en se basant sur la tension de commande ;
un capteur de condition d'impédances acoustiques (502), couplé au haut-parleur et au processeur de signal numérique (560), pour recevoir un courant de commande provenant du haut-parleur et le signal de commande provenant du processeur de signal numérique (560) et pour capter la variation de la condition acoustique du haut-parleur en se basant sur le signal de commande et le courant de commande.

9. L'appareil électronique tel que revendiqué dans la revendication 8, dans lequel le capteur de condition d'impédances acoustiques (502) comprend :
un convertisseur analogique-numérique (520), couplé au haut-parleur, pour recevoir le courant de commande dans un format analogique provenant du haut-parleur et
convertir le courant de commande en un signal de courant de réaction dans un format numérique ; et
un calculateur d'impédance (530), couplé au convertisseur analogique-numérique (520) et au processeur de signal numérique (560), pour calculer l'impédance du haut-parleur selon le signal de courant de réaction et le signal de commande.

10. L'appareil électronique selon les revendications 8 à 9, dans lequel chaque capteur parmi le capteur de condition d'impédances acoustiques (502) comprend en sus :
un calculateur de facteur de qualité (540), couplé au calculateur d'impédance (530), pour générer le facteur de qualité selon au moins un élément parmi la course et
l'impédance en se basant sur la condition acoustique ; et/ou
dans lequel le circuit de commande (501) est un convertisseur numérique-analogique (510) ; et/ou
dans lequel le processeur de signal numérique (560) comprend en sus :
un mélangeur (550), couplé au convertisseur numérique-analogique (510), mélangeant un signal pilote et un signal audio afin de générer un signal mélangé en tant que signal de commande.

11. Un procédé pour activer une fonction spécifiée, comprenant :
capter une variation d'une condition acoustique d'un haut-parleur, dans lequel la condition acoustique est déterminée par un processeur de signal audio (111) selon une impédance du haut-parleur ou une course du haut-parleur ;
**caractérisé par** le fait de
générer un signal logique de forme d'onde, ayant des états bas et haut, en réponse à la variation captée de la condition acoustique ;
comparer le signal logique de forme d'onde à un modèle défini pour déterminer si le signal logique de forme d'onde et le modèle défini sont concordants ou non ;
interpréter par un processeur d'application (120) le signal logique de forme d'onde comme un signal de contrôle quand le signal logique de forme d'onde et le modèle défini sont concordants ; et
activer au moins un programme d'application ou au moins une fonction correspondant au signal de contrôle.

12. Le procédé tel que revendiqué dans la revendication 11, dans lequel l'étape consistant à générer le signal logique de forme d'onde en réponse à la variation captée de la condition acoustique comprend en sus :
générer un facteur de qualité selon au moins un élément parmi la course et l'impédance en se basant sur la condition acoustique ; et
générer le signal logique de forme d'onde selon le facteur de qualité ; et
convertir le facteur de qualité en signal logique de forme d'onde selon que le facteur de qualité est inférieur ou non à une valeur de seuil.

13. Le procédé selon la revendication 12, dans lequel si un nombre du haut-parleur est N et qu'un nombre du processeur de signal audio (111_1 - 111_N) est N, le procédé comprend en sus :
capter respectivement la variation de la condition acoustique des N haut-parleurs ;
générer N sous-facteurs de qualité selon la variation des conditions acoustiques de N haut-parleurs ;
générer N sous-signaux logiques de forme d'onde selon les N sous-facteurs de qualité ; et
interpréter les N sous-signaux logiques de forme d'onde comme le signal de contrôle, dans lequel N est un nombre entier positif supérieur à 1.

14. Le procédé selon la revendication 13, le procédé comprenant en sus :
déterminer si le processeur d'application (120) fournit un signal audio de play-back ou un signal pilote ;
générer le signal pilote quand le processeur d'application (120) ne fournit pas le signal audio de play-back ;
convertir le signal pilote en une tension de commande afin de commander le haut-parleur ; et
capter la variation de la condition acoustique du haut-parleur en réponse à la tension de commande,
dans lequel le signal pilote est un signal pleine bande avec un volume plus faible qu'une valeur audible, et dans lequel le signal pilote est généré en tant que signal de commande.

15. Le procédé selon la revendication 14, dans lequel l'étape consistant à déterminer si le processeur d'application (120) fournit le signal audio de play-back comprend en sus :
le signal audio de play-back est un signal large bande avec un volume plus bas qu'une valeur audible ; et
recevoir le signal audio de play-back pour qu'il soit un signal de détection et
commander le haut-parleur selon le signal de détection.
